# DEMANDE DE BREVET EUROPEEN

(11) **EP 1 102 445 A1**
(43) Date de publication de la demande: **23.05.2001**
(21) Numéro de dépôt: 00402622.5
(22) Date de dépôt: 21.09.2000
(51) Int. Cl.: H04L 12/66, H04Q 7/32, H04L 29/06, H04Q 7/38

(54) **Passerelle d'accès à des serveurs de contenu, permettant la localisation géographique du terminal**

(30) Priorité: 07.10.1999 FR 9912490
(71) Demandeur: ALCATEL, 75008 Paris (FR)
(72) Inventeur: Dupont, Marc, 95150 Taverny (FR); Vignard, Philippe, 91420 Morangis (FR)
(74) Mandataire: Lamoureux, Bernard

(57) **Abrégé**

Passerelle d'accès à un ou plusieurs serveurs de contenu, possédant :
- Un moyen de réception pour recevoir des requêtes de la part de terminaux, notamment mobiles, transmises à travers un premier réseau,
- un moyen d'insertion pour inclure, dans lesdites requêtes, des données relatives à la localisation géographique dudit terminal, et,
- un moyen pour émettre lesdites requêtes vers ledit un ou plusieurs serveurs de contenu, à travers un second réseau.

## Description

La présente invention concerne l'accès à un serveur de contenu depuis un terminal de communication, notamment un terminal portable. Plus précisément, l'invention est relative à une passerelle permettant de rendre les requêtes issues du terminal dépendantes de la localisation du portable.

Il est connu de pouvoir accéder à des serveurs de contenu à partir de terminaux de télécommunication de tout type, y compris des terminaux mobiles. Ces serveurs de contenu sont par exemple des sites internet. Ces sites offrent des services et des informations que des utilisateurs peuvent vouloir consulter à tout moment, et notamment lorsqu'ils ne disposent que d'un terminal portable.

Il existe des protocoles particuliers permettant l'accès aux informations et services de ces sites internet à partir de terminaux portables. Ces protocoles, telles que WAP (*Wireless Application Protocol*), défini par le WAP Forum, prennent en compte les possibilités réduites de ces terminaux, comparées à celles de micro-ordinateurs multimédias.

Certains des services et informations peuvent gagner en pertinence en connaissant la localisation géographique de l'usager y accédant. Par exemple, l'usager peut désirer connaître le trafic routier autour de sa localisation géographique, ou bien il peut désirer connaître des ressources (cinémas, restaurants, magasins etc.) dans les environs. Dans ce cas, il peut s'adresser à des sites internet qui, connaissant sa position géographique, lui fourniront des informations personnalisées.

Toutefois, un problème existe en ce qui concerne les terminaux mobiles puisque la position de ceux-ci est, par définition, non fixe. Aussi, il est

La figure 1 représente l'architecture générale dans laquelle s'insère la passerelle selon l'invention.

La figure 2 schématise un échange de données classique entre un terminal et un serveur de contenu.

La figure 3 illustre une architecture possible permettant au serveur de localisation et au terminal mobile de réaliser les dialogues nécessaires pour déterminer la localisation du terminal.

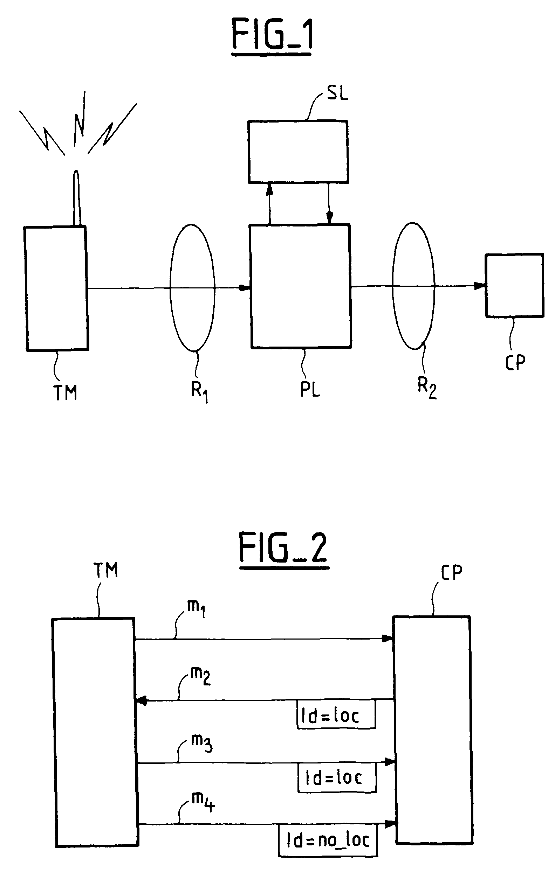

Sur la figure 1, on a représenté le terminal TM, préférentiellement mobile, la passerelle de localisation PL et le serveur de contenu CP. La passerelle de localisation PL est connectée au terminal TM par un premier réseau R₁, et au serveur de contenu CP par un second réseau R₂. La passerelle de localisation PL est en outre connectée à un serveur de localisation SL.

Le terminal TM émet une requête à l'adresse d'un serveur de contenu, référencé CP (pour "*Content Provider*", selon la terminologie de langue anglaise).

Cette requête peut, par exemple, être émise lors d'une session de navigation conformément aux protocoles de type HTTP (*HyperText Transfer Protocol*), WAP (*Wireless Application Protocol*).

Il est à noter que bien que s'appliquant plus particulièrement aux terminaux mobiles, l'invention peut aussi s'appliquer aux terminaux fixes.

Cette requête peut aussi être émise en dehors de toute navigation. Par exemple, elle peut être émise en réponse à une notification reçue d'un serveur désireux de connaître la localisation du terminal TM.

La requête est ensuite acheminée au sein d'un réseau R₁ de télécommunication. Dans le cas où l'on a affaire à un terminal mobile, ce réseau est classiquement de type PLMN (*Public Land Mobile Network*).

Après acheminement, la requête aboutit à une passerelle de localisation PL. La passerelle de localisation détermine tout d'abord si la requête nécessite ou non une localisation géographique.

Il est important de noter que, bien évidemment, toutes les requêtes émises par un terminal ne nécessitent par une localisation géographique. C'est par exemple le cas des requêtes adressées à des serveurs de contenu, dont les informations et services sont indépendant de la position géographique (par exemple, des informations sur les actualités nationales ou internationales, ou financières).

Cette détermination peut être mise en oeuvre de différentes façons. Selon une première mise en oeuvre, la requête elle-même peut contenir un indicateur à deux états qui indique si la requête nécessite une localisation géographique (état 1) ou non (état 2). Le terminal insère lui-même cet indicateur.

La figure 2 montre un exemple d'échange entre le terminal mobile TM et le serveur de contenu CP. Les éléments intervenant dans l'échange comme la passerelle de localisation PL ou les réseaux R₁ et R₂, ne sont pas montrés par soucis de clarté. Le terminal émet un premier message m₁ demandant le chargement de la page principale du serveur de contenu CP. Celui-ci répond par un deuxième message m₂ contenant la page en question, codée dans un langage de description de page tel HTML (*HyperText Markup Language*), et contenant une information Id indiquant que le serveur de contenu peut prendre en compte la localisation géographique (Id=loc).

Le terminal peut alors répondre par un message m₃ contenant un indicateur Id positionné à un état Id=loc signifiant qu'il désire des informations dépendant de sa localisation. Ce message m₃ est classiquement envoyé en réponse à un événement survenu sur son interface homme/machine (activation d'un lien hypertexte notamment).

Selon le protocole HTTP, ce message peut être codé sous la forme "http://serveur/page.htm?loc=true". Cette chaîne signifie que l'on veut accéder au serveur "serveur" puis au document "page.htm" qui est décrit en langage HTML, et que l'on envoie de surcroît une information booléenne "loc=true", signifiant par exemple que l'on désire une localisation géographique. Bien évidemment, l'homme du métier est à même d'implémenter de diverses façons, ce mécanisme.

À la lecture de cet indicateur, la passerelle de localisation PL peut déterminer que la requête m₃ nécessite une localisation géographique.

Le terminal TM peut aussi répondre par un message m₄ contenant un indicateur à l'état signifiant qu'il ne désire pas d'information dépendant de sa localisation géographique (Id=no_loc). Auquel cas, la passerelle de localisation PL détermine que la requête m₄ ne nécessite pas de localisation géographique.

Une autre mise en oeuvre consiste à ne pas utiliser d'identifiant contenu dans la requête. La détermination est alors effectuée uniquement par le couple passerelle de localisation / serveur de contenu.

Par exemple, dans le cas où la requête est une réponse à une notification du serveur de contenu, c'est la notification qui peut contenir un tel indicateur à deux états. Cet indicateur peut être stocké dans une mémoire, pour qu'à la réception de la requête correspondante, le mécanisme de localisation géographique soit déclenché (indépendamment de la présence d'un indicateur dans la requête elle-même).

Dans le cas où la passerelle détermine que la requête ne nécessite pas de localisation géographique, celle-ci est directement émise à destination du serveur de contenu CP au travers d'un second réseau R₂. Ce second réseau est classiquement un réseau de données de type internet, et utilise un protocole de communication de type HTTP.

Dans le cas où la requête nécessite une localisation géographique, une demande de localisation peut être transmise à un serveur de localisation SL dont le but est de déterminer cette localisation.

Selon une première mise en oeuvre, la requête peut contenir des données permettant de déterminer cette localisation. Ces données peuvent être des informations sur les caractéristiques radioélectriques des liaisons radios entre le terminal mobile TM (alors de type GSM) et les stations de base du réseau de télécommunication R₁. Ces informations, appelées RxLevel dans les normes GSM, peuvent être utilisées par le serveur de localisation pour déterminer la localisation. On comprend en effet que les caractéristiques radioélectriques dépendent de la distance séparant les émetteurs et récepteurs de la liaison, et que par conséquent, par triangulation, la connaissance de l'environnement radioélectrique permet une détermination de la localisation.

Selon une deuxième mise en oeuvre, la requête ne comporte aucune information permettant la détermination directe de la localisation du terminal TM. C'est par exemple le cas en utilisant les protocoles WAP 1.0 à partir d'un terminal mobile ou HTTP à partir d'un terminal fixe.

En ce cas, une première solution consiste à effectuer une demande au terminal afin d'obtenir les paramètres radioélectriques et mettre en oeuvre une détermination de la localisation ainsi qu'indiqué brièvement précédemment.

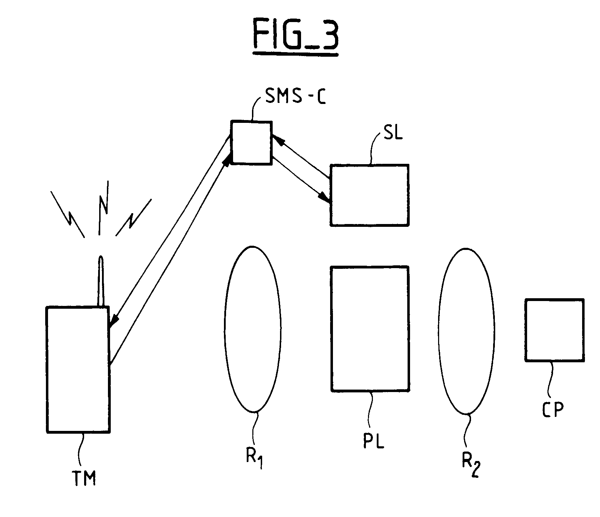

Pour ce faire, il est possible de mettre en oeuvre l'architecture présentée en figure 3, dans le cas d'un terminal mobile de type GSM. Dans ce contexte, le serveur de localisation SL, à la réception d'une demande de localisation de la part de la passerelle de localisation PL, émet vers un serveur SMS-C (*Short Message Service Center*), un message demandant lesdites informations. La communication entre le serveur de localisation SL et le serveur SMS-C est conforme aux protocoles habituels, c'est-à-dire SMPP (*Short Message Point-to-Point*) ou X.25, etc.

Le serveur SMS-C convertit alors la demande en message SMS à destination du terminal mobile TM, et plus particulièrement d'une application contenue dans la mémoire SIM (*Subscriber Identity Module*) de ce terminal. Cette application répond par un autre message SMS contenant les informations relatives à l'environnement radioélectrique du terminal mobile TM, c'est-à-dire, par exemple, les paramètres RxLevels de la norme GSM.

Ce nouveau message SMS est transmis au serveur SMS-C qui le convertit au protocole approprié (SMPP, X.25...) et le transmet au serveur de localisation SL, qui peut alors mettre en oeuvre les procédés appropriés évoqués ci-dessus pour déterminer la localisation géographique de terminal mobile TM.

Une deuxième solution consiste à prendre en compte uniquement l'identifiant de la cellule GSM dans laquelle se trouve le terminal mobile TM. Cet identificateur peut être obtenu de la même façon que les paramètres radioélectriques, c'est-à-dire soit par lecture de la requête issue du terminal mobile TM, soit par échange de messages de type SMS, ou soit par d'autres procédés. Selon cette solution, le serveur de localisation peut accéder à une base de données des stations de base mettant en correspondance les identificateurs des cellules et leur position géographique. Cette base de données est habituellement utilisée dans un but de planification radio et de densification du réseau de télécommunication GSM par l'opérateur de télécommunication.

La localisation géographique obtenue par cette méthode est peu précise puisqu'elle ne peut avoir une précision moyenne meilleure à un demi-rayon d'une cellule GMS, soit environ 5 km à 6 km.

Une troisième solution consiste à utiliser les mesures des temps de propagations des ondes radioélectriques entre le terminal mobile et les stations de base pour déterminer la localisation du terminal.

Selon cette solution, le réseau envoie une pluralité de messages au terminal mobile lui demandant, à chaque message, de se connecter à une différente station de base. Pour chacune de ces connections, le terminal mobile mesure le temps de propagation des ondes radioélectriques entre lui-même et la station de base. En fonction de ces temps de propagation, et connaissant la vitesse de propagation d'une onde électromagnétique, on peut en déduire un ensemble de distances entre le terminal mobile dont on cherche la localisation géographique et des stations de base dont on connaît la localisation géographique. Par triangulation géométrique, on peut alors déduire une localisation géographique approchée du terminal mobile, de façon beaucoup plus précise que par la solution précédente.

Le procédé utilisé par le serveur de localisation SL pour déterminer la localisation géographique du terminal TM est en dehors du champ de la présente invention, dans la mesure où l'architecture présentée en est indépendante.

Une fois la détermination de la localisation géographique effectuée, le serveur de localisation SL la transmet à la passerelle de localisation PL. Celle-ci possède un moyen d'insertion pour inclure les données relatives à la localisation géographique du terminal TM dans la requête provenant de ce terminal TM.

Selon le protocole HTTP, cette insertion peut être faite de façon similaire à précédemment pour l'insertion de l'indicateur (Id) de localisation. Par exemple, une requête modifiée pourrait ressembler à "http://serveur/page.htm?loc=true&x=latitude&y=longitude", signifiant d'une part que l'on désire prendre en compte à localisation géographique du terminal, et d'autre part que celui-ci est situé à la localisation géographique déterminée par les paramètres "x=latitude" et "y=longitude".

Afin d'effectuer cette insertion, la passerelle de localisation PL peut utiliser les codes de redirection définis par le protocole HTTP (par exemple, le code 302 ou tout autre code de la série 300).

La requête ainsi complétée est alors émise vers le ou les serveurs de contenu CP, qui peuvent y répondre en prenant en compte les données relatives à la localisation géographique qu'elle contient.

En retour, le (ou les) serveur de contenu CP peut par exemple émettre un document multimédia, par exemple en langage HTML, contenant des informations dépendant de cette localisation géographique : informations sur le trafic routier, sur les ressources environnantes (magasins, cinéma, hôpitaux, restaurants...), etc.

Le serveur de contenu peut aussi utiliser les données relatives à la localisation géographique afin d'effectuer un pistage (ou *tracking,* selon la terminologie en langue anglaise) du terminal mobile.

Les différents éléments constituant l'architecture selon l'invention sont des éléments fonctionnels, donnés à titre indicatif pour la clarté de l'exposé. Notamment, les passerelle de localisation PL et serveur de localisation SL peuvent être mis en oeuvre au sein d'un même équipement physique, ou bien être répartis su plusieurs équipements disjoints.

## Revendications

1. Passerelle (PL) d'accès à un ou plusieurs serveurs de contenu (CP), possédant :
• Un moyen de réception pour recevoir des requêtes de la part de terminaux (TM), transmises à travers un premier réseau (R₁),
• un moyen d'insertion pour inclure, dans lesdites requêtes, des données relatives à la localisation géographique desdits terminaux, et,
• un moyen pour émettre lesdites requêtes vers ledit un ou plusieurs serveurs de contenu, à travers un second réseau (R₂).

2. Passerelle selon la revendication 1, caractérisée en ce qu'elle possède en outre un moyen pour déterminer lesdites données relatives à la localisation géographique dudit terminal, à partir de données fournies dans ladite requête.

3. Passerelle selon la revendication 1, caractérisée en qu'elle possède en outre un moyen pour émettre une demande de localisation à destination d'un serveur de localisation (SL), et un moyen pour recevoir lesdites données relatives à la localisation géographique dudit terminal, de la part dudit serveur de localisation.

4. Passerelle selon la revendication 3, caractérisée en ce que ledit moyen de réception est apte à recevoir des requêtes selon un protocole conforme aux normes HTTP.

5. Procédé pour localiser géographiquement une requête provenant d'un terminal (TM) à destination d'un serveur de contenu, comportant les étapes ordonnées suivantes :
• Émission par ledit terminal d'une requête à travers un premier réseau à l'adresse dudit serveur de contenu,
• Réception de ladite requête par une passerelle,
• Détermination par ladite passerelle si ladite requête nécessite une localisation géographique, et si oui, insertion de la localisation géographique dudit terminal dans ladite requête,
• Émission de ladite requête vers ledit serveur de contenu, à travers un second réseau.
